(19) Europäisches Patentamt
European Patent Office
Office européen des brevets

(11) Veröffentlichungsnummer : **0 015 241**
**B2**

(12) **NEUE EUROPÄISCHE PATENTSCHRIFT**

(45) Veröffentlichungstag der neuen Patentschrift : **25.03.87**

(51) Int. Cl.[4] : **C 08 K 5/58**

(21) Anmeldenummer : **80810057.2**

(22) Anmeldetag : **18.02.80**

(54) **Aus einem Organozinnalkoholat und einem Organozinnmercaptid bestehende Stoffgemische; ihre Verwendung für die Stabilisierung chlorierter Polymere.**

(30) Priorität : **22.02.79 CH 1787/79**
**07.12.79 CH 10872/79**

(43) Veröffentlichungstag der Anmeldung : **03.09.80 Patentblatt 80/18**

(45) Bekanntmachung des Hinweises auf die Patenterteilung : **28.03.84 Patentblatt 84/13**

(45) Bekanntmachung des Hinweises auf die Entscheidung über den Einspruch : **25.03.87 Patentblatt 87/13**

(84) Benannte Vertragsstaaten :
**BE DE FR GB IT NL SE**

(56) Entgegenhaltungen :
**BE-A- 630 458**
**DE-A- 1 926 949**
**DE-A- 2 444 991**
**FR-A- 2 028 994**
**FR-A- 2 029 395**
**FR-A- 2 311 798**
**GB-A- 679 655**
**GB-A- 1 008 845**
**US-A- 3 953 385**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Müller, Horst, Dr.**
**Reichenberger Strasse 12**
**D-6149 Fürth/Odenwald (DE)**

(74) Vertreter : **Zumstein, Fritz, Dr.**
**Dr. F. Zumstein sen Dr. E. Assman Dipl.-Ing. F. Klingseisen Dr. F. Zumstein jun. Bräuhausstrasse 4**
**D-8000 München 2 (DE)**

**EP 0 015 241 B2**

Jouve, 18, rue St-Denis, 75001 Paris, France

**Beschreibung**

Die vorliegende Erfindung betrifft Stoffgemische aus Organozinnverbindungen, sowie chlorhaltige Polymere und geschäumte Kunststoffe, welche diese Gemische enthalten.

Als wirksame Thermostabilisatoren werden in DE-OS 1 926 949 Stoffgemische bestehend aus einem Organozinnmercaptid und einer Organozinnverbindung aus der Gruppe Organozinn, Organozinncarboxylat oder Organozinnalkoholat bzw. Organozinnoxid beschrieben. Spezifisch ist ein Stoffgemisch bestehend aus einem Organozinnthioglykolsäureester und einer Organozinnverbindung, wie oben beschrieben, offenbart.

Da bekanntlich Organozinnmercaptide die Schlagzähigkeit der Hartpolymere herabsetzen, ist das Interesse an hochwirksamen Stabilisatoren, die in kleinen Mengen eingesetzt werden können, gross.

Organozinnverbindungen werden ebenfalls als Aktivatoren für die Herstellung von geschäumten Gegenständen aus Kunststoff verwendet. Die Gegenstände werden im allgemeinen nach bekannten Verfahren, beispielsweise dem Spritzgiessverfahren, hergestellt, indem man dem Kunststoff ein geeignetes Treibmittel zumischt und die Verarbeitungstemperatur so wählt, dass sie oberhalb der Zersetzungstemperatur des Treibmittels liegt. Oft liegt jedoch die Zersetzungstemperatur zu weit oberhalb der Verarbeitungstemperatur, so dass die Treibmittel nicht allein eingesetzt werden können. Es werden darum häufig Aktivatoren verwendet, die die Zersetzung des Treibmittels beschleunigen und/oder die Zersetzungstemperatur herabsetzen.

In DE-OS 2 444 991 ist ein Aktivatorsystem aus Organozinnoxiden, Organozinnalkoholaten oder aus deren Gemischen beschrieben, wobei zur Erhöhung der Thermostabilität Organozinnmercaptocarbonsäureester mitverwendet werden können.

Es wurde nun gefunden, dass ein Gemisch aus Organozinnverbindungen und aus einem Organozinnmercaptopropionsäureester chlorhaltigen Polymeren überraschend gute Licht- und Wärmestabilität verleiht und darüberhinaus beim Schäumen von Kunststoffen ein wirksamer Aktivator ist.

Gegenstand der vorliegenden Erfindung sind daher Stoffgemische bestehend aus einem Organozinnalkoholat der Formel (I)

$$(R^1)_2-\overset{OR^2}{\overset{|}{Sn}}-OR^3 \qquad (I)$$

und aus einem Organozinnmercaptid der Formel (II) bzw. der Formel (III)

$$(R^1)_n-\overset{R^4}{\overset{|}{Sn}}(-S-CH_2CH_2-COOR^5)_{3-n} \qquad (II)$$

$$R^1-\overset{X}{\overset{\|}{Sn}}-S-CH_2CH_2-COOR^5 \qquad (III)$$

die gegebenenfalls zusätzlich ein Organozinncarboxylat der Formel (IV) bzw. der Formel V enthalten

$$(R^1)_2-Sn(-OOC-R^6)_2 \qquad (IV)$$

$$R^6-COO-\overset{(R^1)_2}{\overset{|}{Sn}}-O-\overset{(R^1)_2}{\overset{|}{Sn}}-OOC-R^6 \qquad (V)$$

worin $R^1$ $C_1$-$C_{12}$ Alkyl, $R^2$ $C_{10}$-$C_{30}$ Alkyl, Phenyl substituiert mit einer oder zwei $C_8$-$C_{12}$ Alkylgruppen sind, $R^3$ die für $R^2$ angegebene Bedeutung besitzt oder für die Gruppe $-Sn(OR^2)(R^1)_2$ steht, worin $R^1$ und $R^2$ die zuvor angegebene Bedeutung haben, X Schwefel oder Sauerstoff, $R^4$ die Gruppe $-S-CH_2CH_2-COOR^5$ oder $-X-Sn(R^1)_n(S-CH_2CH_2-COOR^5)_{3-n}$ sind, wobei $R^1$ und X die zuvor angegebene Bedeutung haben, $R^5$ $C_8$-$C_{14}$ Alkyl ist, n die Zahl 1 oder 2 ist, und $R^6$ $C_{10}$-$C_{30}$ Alkyl bedeutet, wobei das Gewichtsverhältnis I : II bzw. I : III im Bereich 9 : 1 bis 1 : 9 liegt.

Ebenfalls Gegenstand der Erfindung sind Stoffgemische bestehend aus einem Organozinnmercaptid der Formel II bzw. der Formel III

$$\begin{array}{c} R^4 \\ | \\ (R^1)_n\text{–}Sn(\text{–}S\text{–}CH_2CH_2\text{–}COOR^5)_{3-n} \end{array} \qquad (II)$$

$$\begin{array}{c} X \\ \| \\ R^1\text{–}Sn\text{–}S\text{–}CH_2CH_2\text{–}COOR^5 \end{array} \qquad (III)$$

und aus einem Organozinncarboxylat der Formel IV bzw. der Formel (V)

$$(R^1)_2\text{–}Sn(\text{–}OOC\text{–}R^6)_2 \qquad (IV)$$

$$\begin{array}{c} \quad (R^1)_2 \quad (R^1)_2 \\ \quad | \qquad\quad | \\ R^6\text{–}COO\text{–}Sn\text{–}O\text{–}Sn\text{–}OOC\text{–}R^6 \end{array} \qquad (V)$$

worin die Symbole die im Anspruch 1 angegebene Bedeutung haben, wobei das Gewichtsverhältnis II : IV bzw. III : IV von 9 : 1 bis 1 : 9 beträgt.

$R^1$ bedeutet $C_1$-$C_{12}$ Alkyl, beispielsweise Methyl, Äthyl, n-Propyl, iso-Propyl, n-Butyl, tert.-Butyl, n-Amyl, iso-Amyl, n-Hexyl, n-Heptyl, n-Octyl, n-Dodecyl. Bevorzugt sind Methyl, n-Butyl, n-Amyl, n-Hexyl, n-Octyl. Besonders bevorzugt sind Methyl, n-Butyl und n-Octyl.

Bedeuten $R^2$ und $R^3$ $C_{10}$-$C_{30}$ Alkyl, so kann es sich um Decyl, Dodecyl, iso-Tridecyl, Tetradecyl, Hexadecyl, 16-Methyl-heptadecyl, Nonadecyl, 2-Eicosyl, Docosyl, Tetracosyl oder Hexacosyl handeln. Bevorzugt besitzen $R^2$ und $R^3$ als Alkylgruppen 10 bis 22 Kohlenstoffatome. Besonders bevorzugt sind iso-Tridecyl und Tetradecyl, $R^2$ und $R^3$ können Phenyl substituiert mit einer oder zwei $C_8$-$C_{12}$ Alkylgruppen bedeuten, wie z. B. p-Octylphenyl, p-(2-Äthylhexyl)-phenyl, p-Nonylphenyl, p-(3,7-Dimethyloctyl)-phenyl, 3,5-Dinonylphenyl. Besonders bevorzugt ist p-Nonylphenyl.

Bedeutet $R^3$ die Gruppe —$Sn(OR^2)$ $(R^1)_2$, so stehen $R^1$ und $R^2$ für die gleichen Reste wie zuvor beschrieben.

$R^4$ kann die Gruppe —S—$CH_2CH_2$—$COOR^5$ bedeuten, worin $R^5$ $C_8$-$C_{14}$ Alkyl ist, wie z. B. 2-Äthylhexyl, Decyl, Dodecyl, iso-Tridecyl, Tetradecyl. Bevorzugt ist $R^5$ 2-Äthylhexyl, Dodecyl und iso-Tridecyl, insbesondere 2-Äthylhexyl, iso-Tridecyl.

$R^4$ kann die Gruppe —X—$Sn(R^1)_n(S—CH_2CH_2—COOR^5)_{3-n}$ bedeuten, worin X, $R^1$, $R^5$ und n die zuvor angegebene Bedeutung haben. Bevorzugt ist $R^4$—S—$CH_2CH_2$—$COOR^5$.

$R^6$ bedeutet $C_{10}$-$C_{30}$ Alkyl, beispielsweise Decyl, Dodecyl, iso-Tridecyl, Tetradecyl, iso-Octadecyl, Nonadecyl, Docosyl, Hexacosyl. Bevorzugt ist $R^6$ $C_{10}$-$C_{22}$ Alkyl, besonders bevorzugt ist 16-Methylheptadecyl, iso-Nonyl und n-Undecyl.

Beispiele für die Verbindungen der Formel (I) sind :
Dibutylzinn-ditetradecyloxid
Dibutylzinn-di-iso-tridecyloxid
Dibutylzinn-bis-(p-octylphenyloxid)
Dioctylzinn-bis-(p-nonylphenyloxid)
Dioctylzinn-ditetradecyloxid
Bis(dibutyl-p-nonylphenyloxy-zinn)oxid
Bis(dioctyl-p-octylphenyloxy-zinn)oxid
Bis(dibutyl-iso-tridecyloxy-zinn)oxid
Bis)dibutyl-iso-tridecyloxy-zinn)oxid
Bis(dibutyl-tetradecyloxy-zinn)oxid
Bevorzugt sind :
Dibutylzinn-ditetradecyloxid
Dibutylzinn-di-iso-tridecyloxid
Dibutylzinn-bis-(p-nonylphenyloxid)

Beispiele für die Verbindungen der Formel (II) sind :
Octylzinn-tris(dodecyl-β-mercaptopropionat)
Dibutylzinn-bis(iso-tridecyl-β-mercaptopropionat)
Dibutylzinn-bis(2-äthylhexyl-β-mercaptopropionat)
Bis(dibutylzinn-2-äthylhexyl-β-mercaptopropionat)oxid
Bevorzugt ist :
Dibutylzinn-bis(2-äthylhexyl-β-mercaptopropionat)

Bevorzugtes Beispiel für die Verbindung der Formel (III) :
Butyl(2-dodecyloxycarbonyläthyl-mercapto)-zinnsulphid

Beispiele für die Verbindung der Formel (IV) bzw. (V) sind :
Dibutylzinn-dilaurat

Bis(dibutyl-iso-decanoyl-zinn)oxid
Dibutylzinn-di-iso-octadecylat
Bevorzugt ist:
Dibutylzinn-di-iso-octadecylat

Die chlorhaltigen Polymere, die das erfindungsgemässe Stabilisatorgemisch enthalten, können Homopolymere, wie z. B. PVC, Polyvinylidenchlorid usw. sein. Geeignet sind Emulsions-, Suspensions- und Massepolyvinylchlorid. Sie können auch Mischpolymere sein, die durch Mischpolymerisation von Vinylchlorid oder Vinylidenchlorid mit anderen äthylenisch ungesättigten Monomeren erhalten worden sind. Äthylenisch ungesättigte Monomere sind Verbindungen, die polymerisierbare C-C-Doppelbindungen enthalten und umfassen Acrylate, wie z. B. Acrylsäure, Äthylacrylat, Acrylonitril usw.; Vinylmonomere, wie z. B. Styrol, Vinylacetat usw.; Maleinsäurederivate, wie z. B. Maleinsäure, Maleinsäureester, Maleinsäureanhydrid.

Die erfindungsgemässen Gemische können ferner als Aktivatoren beim Schäumen von Kunststoffen verwendet werden. Diese Kunststoffe können chlorhaltige Polymere, wie oben beschrieben, sein. Aber es kommen auch Polyester, Polyacetone, Polyamide, Polyäther, Polycarbonate und bevorzugt Polyole in Frage.

Besonders bevorzugt werden die erfindungsgemässen Gemische in Polymeren auf der Grundlage von PVC, insbesondere in PVC, und zwar sowohl im Weich-PVC als auch im Hart-PVC. Das Hart-PVC, welches mit den erfindungsgemässen Stoffgemischen stabilisiert wurde, ist ganz besonders geeignet für die Aussenanwendung.

Organozinnalkoholate als Aktivatoren sind aus DE-OS 2 444 991 bekannt. Organozinnalkoholate, sowie -carboxylate als Licht- und Thermostabilisatoren für halogenierte Polymere wurden in der bereits erwähnten DE-OS 1 926 949 in Kombination mit Organozinn-mercaptocarbonsäureestern beschrieben. Letztere ist aus US 3 642 677 ebenfalls bekannt.

Die Herstellung der Organozinnoxide kann in altbekannter Weise durch Hydrolyse der entsprechenden Organozinnhalogenide erfolgen. Organozinnalkoholate können ebenfalls in bekannter Weise aus den entsprechenden Organozinnhalogeniden mit Na-Alkoholat bzw. aus Organozinnoxiden mit Alkohol hergestellt werden. Die Organozinncarboxylate können durch einfache Umsetzung der Alkalisalze der betreffenden Säure mit einem wasserlöslichen Salz des Zinns erhalten werden.

Ein besonders unkompliziertes Herstellungsverfahren ist das sogenannte « Eintopfverfahren », wenn also die Alkohol-, Carbonsäure-, Mercaptan- und Zinnreaktanten gleichzeitig eingesetzt werden.

Die Menge an Organozinnverbindungen in den Substraten richtet sich nach wirtschaftlichen und anwendungstechnischen Gesichtspunkten. Im allgemeinen werden 0,1 bis 3 Gewichtsprozent, bezogen auf das Polymer, insbesondere 0,3 bis 2 Gewichtsprozent zugegeben. Das Gewichtsverhältnis der Organozinnverbindungen der Formeln I : II, I : III, II : IV bzw. III : IV in den erfindungsgemässen Gemischen, beträgt 9 : 1 bis 1 : 9, vorzugsweise 9 : 1 bis 6 : 4.

Die stabilisierten polymeren Mischungen der Erfindung können gegebenenfalls 0,1 bis 5 Gew.-%, vorzugsweise 0,5 bis 3 Gew.-%, der üblichen Zusatzstoffe verwendet werden, insbesondere Antioxydantien, Lichtstabilisatoren, oder deren Gemische. Beispiele für solche Zusatzstoffe:

Antioxydantien, wie 2,6-Dialkylphenole, z. B. 2,4,6-Tri-tert.-butylphenol, 2,6-Di-tert.-butyl-4-methylphenol, 2-tert.-butyl-4,6-dimethyl-phenol, β-(3,5-Di-tert.-butyl-4-hydroxy-phenyl)-propionsäureester von Pentaerythrit (Irganox® 1010) oder das gleiche Ester von Stearylalkohol (Irganox® 1076) und andere wie Bisphenol A, UV-Absorber und Lichtschutzmittel wie 2-(2'-Hydroxyphenyl)-benztriazole, 2,4-Bis-(2'-hydroxyphenyl)-6-alkyl-s-triazine, 2-Hydroxybenzophenone, 1,3-Bis-(2'-hydroxybenzoyl)-benzole, Ester von gegebenenfalls substituierten Benzoesäuren, Acrylate, des weiteren Nickelverbindungen, sterisch gehinderte Amine, Oxalsäurediamide oder sonstige Zusätze wie z. B. Weichmacher, Gleitmittel, Emulgatoren, Füllstoffe, Russ, Asbest, Kaolin, Talk, Glasfasern, Pigmente, optische Aufheller, Flammschutzmittel, Antistatica.

Das erfindungsgemässe Gemisch der Organozinnverbindungen kann nach bekannten Methoden in bekannten Mischvorrichtungen mit dem Polymer vermischt werden. Man kann hierbei das Treibmittel für geschäumte Kunststoffe zusammen mit den Organozinnaktivatoren zugeben, oder den Aktivator mit einem Kunststoff vermischen, der das Treibmittel schon enthält. Um möglichst gleichmässige Mischungen zu erzielen, ist es vorteilhaft, die einzelnen Komponenten in Pulverform zu vermischen. Es ist jedoch auch möglich, Kunststoffgranulate zu verwenden, wobei zur besseren Haftung des Treibmittels und/oder Organozinnaktivators zusätzlich ein Bindemittel verwendet werden kann.

Die erfindungsgemässen Stoffgemische sind überraschend wirksame Thermo- und Lichtstabilisatoren. Dank ihrer hohen Lichtschutzwirkung ist das stabilisierte Polymer für die Aussenanwendung besonders geeignet. Darüber hinaus sind die erfindungsgemässen Stoffgemische überraschend wirksame Aktivatoren beim Schäumen von Kunststoffen.

Die Erfindung wird anhand der folgenden Beispiele näher erläutert. In den Beispielen sind alle Teile in Gewichtsteilen ausgedrückt, sofern nichts anderes angegeben ist. Prozente sind Gewichtsprozente.

Beispiel 1: Dibutylzinn-dialkoholat

37,5 g (0,15 Mol) Dibutylzinnoxid wurden mit 61,0 g (0,30 Mol) eines technischen Gemisches aus ca.

36 % Laurylalkohol und ca. 64 % Myristylalkohol (mittleres Molgewicht ca. 203) in siedendem Toluol unter Auskreisung des Reaktionswassers umgesetzt. Nach Entfernung des Toluols wurde eine farblose Flüssigkeit erhalten, die beim Stehen langsam wachsartig erstarrte.

Das entstandene Produkt enthält ein Gemisch aus 36 % Laurylalkoholat und 64 % Myristylalkoholat.

$Sn_{gef}$ : 18,0 % $n_{20}^{D}$ : 1,471 5

Beispiel 2 : Dibutylzinn-bis-(β-mercaptopropionsäure-2-äthylhexylester)

25,0 g (0,1 Mol) Dibutylzinnoxid wurden mit 43,6 g Thiopropionsäure-2-äthylhexylester bei 110 °C unter Wasserstrahlvakuum bis zur vollständigen Entfernung des Reaktionswassers umgesetzt.

$Sn_{gef}$ : 17,1 % $n_{20}^{D}$ : 1,501 5

Das Stabilisatorgemisch entsteht wenn die 30 % der gewonnenen Verbindung mit 70 % Dibutylzinn-dialkoholat (aus Beispiel 1) bei ca. 70 °C vermischt wird. ($n_{20}^{D}$ = 1,478 6).

Beispiel 3 : (« Eintopfverfahren »)

Gemisch aus

| | |
|---|---|
| I. $(C_4H_9)_2$—Sn(—O—i—$C_{13}H_{27})_2$, | (30,0 %) |
| II. $(C_4H_9)_2$—Sn(—S—$CH_2CH_2$—COO—i—$C_{13}H_{27})_2$ und | (29,6 %) |
| IV. $(C_4H_9)_2$—Sn(—OOC—i—$C_{17}H_{35})_2$ | (40,4 %) |

62,7 g Dibutylzinnoxid (0,25 Mol) wurden in 350 ml siedendem Toluol mit 36,0 g (0,18 Mol) Isotridecanol, 56,1 g (0,18 Mol) Isostearinsäure und 41,6 g (0,14 Mol) Thiopropionsäureisotridecylester unter Auskreisung des Reaktionswassers umgesetzt. Nach Abzug des Toluols wurden 195 g einer farblosen Flüssigkeit erhalten.

$Sn_{gef.}$ : 14,5 % $n_{20}^{D}$ : 1,483 1

Das Gewichtsverhältnis von I : II beträgt 1 : 1.

Beispiel 4 : (« Eintopfverfahren »)

Gemisch aus

| | |
|---|---|
| I. $(C_4H_9)_2$—Sn(—O—i—$C_{13}H_{27})_2$, | (20,4 %) |
| II. $(C_4H_9)_2$—Sn(—S—$CH_2CH_2$—COO—i—$C_{13}H_{27})_2$und | (52,0 %) |
| IV. $(C_4H_9)_2$—Sn(—OOC—i—$C_{17}H_{35})_2$ | (27,6 %) |

32,15 g Dibutylzinnoxid (0,129 Mol) wurden in 150 ml siedendem Toluol mit 12,91 g (0,065 Mol) Isotridecanol, 20,08 g (0,065 Mol) Isostearinsäure und 37,18 g (0,129 Mol) Thiopropionsäureisotridecylester unter Auskreisung des Reaktionswassers umgesetzt. Nach Abzug des Toluols wurde eine farblose Flüssigkeit erhalten.

$n_{20}^{D}$ : 1,488 8

Das Gewichtsverhältnis von I : II beträgt 1 : 2,5.

Beispiel 5.

Gemisch aus

| | |
|---|---|
| V. $(C_4H_9)_2$—Sn(OOC—$C_{11}H_{23}$)—<br>O—Sn—$(C_4H_9)_2$(OOC—$C_{11}H_{23}$) | (70,0 %) |
| II. $(C_4H_9)_2$—Sn(—S—$CH_2CH_2$—COO—i—$C_8H_{17})_2$ | (30,0 %) |

39,6 g (0,159 Mol) Dibutylzinnoxid wurden mit 31,8 g (0,159 Mol) Laurinsäure bei 110° unter Entfernung des Reaktionswassers umgesetzt. Das resultierende flüssige Reaktionsprodukt wurde mit 30 g Dibutylzinn-bis-(β-mercaptopropionsäure-2-äthylhexylester), nach Beispiel 2 hergestellt, vermischt.

$Sn_{gef.}$ : 24,5 % $n_{20}^{D}$ : 1,492 8

Das Gewichtsverhältnis von II : V beträgt 1 : 2,3.

Beispiel 6 : (« Eintopfverfahren »)

Gemisch aus

| | |
|---|---|
| I. $(C_4H_9)_2$—Sn(—O—i—$C_{13}H_{27})_2$ | (28,6 %) |
| II. $(C_4H_9)_2$—Sn(—S—$CH_2CH_2$—COO—i—$C_{13}H_{27})_2$ | (28,8 %) |
| IV. $(C_4H_9)_2$—Sn(—OOC—i—$C_{17}H_{35})_2$ | (38,6 %) |

+ Irganox® 1076 (4,0 %)

32,7 g (0,13 Mol) Dibutylzinnoxid wurden in 150 ml siedendem Toluol mit 18,8 g (0,09 Mol) Isotridecanol, 29,2 g (0,09 Mol) Isostearinsäure und 21,7 g (0,07 Mol) Thiopropionsäureisotridecylester unter Auskreisung des Reaktionswassers umgesetzt. Nach Abzug des Toluols wurden 4 g Irganox 1076 im Rückstand gelöst. Nach der Filtration wurde eine Flüssigkeit mit folgenden Kenndaten erhalten :

Sn : 15,0 %

$d_{20}^{D}$ : 1,021

$n_{20}^{D}$ : 1,481 7

Das Gewichtsverhältnis von I : II beträgt 1 : 1.

Beispiel 7

Gemisch aus

I. $(C_4H_9)_2$—Sn(—O—i—$C_{13}H_{27})_2$ (13,3 %)

II. $(C_4H_9)_2$—Sn(—S—$CH_2$—COO—i—$C_{13}H_{27})_2$ (28,8 %)

IV. $(C_4H_9)_2$—Sn(—OOC—i—$C_{17}H_{25})_2$ (53,9 %)

+ Irganox® 1076 (4,0 %)

Komponente 1

(Dibutylzinn-alkoholat-Carboxylat)

21,0 g (0,08 Mol) Dibutylzinnoxid wurden in 150 ml siedendem Toluol mit 39,3 g (0,13 Mol) Isostearinsäure und 8,4 g (0,04 Mol) Isotridecanol unter Auskreisung des Reaktionswassers umgesetzt und anschliessend das Toluol destillativ entfernt.

Komponente 2

(Dibutylzinn-bis-thiopropionsäureisotridecylester)

8,9 g (0,036 Mol) Dibutylzinnoxid wurden bei 110° mit 20,46 g (0,072 Mol) Thiopropionsäureisotridecylester unter destillativer Entfernung des Reaktionswassers umgesetzt.

67,2 g von Komponente (1) und 28,8 g von Komponente (2) wurden bei 50° vermischt und in dem Gemisch 4,0 g Irganox 1076 aufgelöst. Nach Filtration wurde eine Flüssigkeit mit folgenden Kenndaten erhalten :

Sn : 14,2 %

d(20°) : 1,033

$n_{20}^{D}$ : 1,486 1

Das Gewichtsverhältnis von I : II beträgt 1 : 2,1.

Beispiel 8

Gemisch aus

I. $(C_4H_9)_2$—Sn(—O— 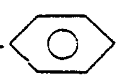 —$C_9H_{19})_2$ (16,0 %)

II. $(C_4H_9)_2$—Sn(—S—$CH_2CH_2$—COO—i—$C_8H_{17})_2$ (19,0 %)

IV. $(C_4H_9)_2$—Sn(—OOC—i—$C_{17}H_{35})_2$ (61,0 %)

+ Irganox® 1076 (4,0 %)

23,8 g (0,096 Mol) Dibutylzinnoxid wurden in 10,5 g (0,049 Mol) Nonylphenol und 44,4 g (0,143 Mol) Isostearinsäure unter Entfernung des Reaktionswassers bei 110° umgesetzt. Das resultierende flüssige Reaktionsprodukt wurde mit 19,0 g Dibutylzinn-bis-β-mercaptopropionsäure-2-äthylhexylester und 4,0 g Irganox® 1076 vermischt.

$Sn_{gef.}$ : 14,6 %

$n_{20}^{D}$ : 1,486 2

Das Gewichtsverhältnis von I : II beträgt 1 : 1,2.

Applikationsteste

Beispiel 9

Statischer Hitzetest

a) Ein Dryblend, bestehend aus 100 Teilen PVC (Solvic® 264 GA der Deutschen Solvay-Werke), 0,2 Teilen Gleitmittel (Wachs E der Höchst Ag), 0,2 Teilen Tinuvin® 320 (2-[2'-Hydroxy-3',5'-di-tert.-butylphenyl]-benztriazol) und 2,5 Teilen Stabilisatorgemisch aus Beispiel 2 wird auf einem Mischwalzwerk 5 Minuten bei 180 °C gewalzt und danach werden Testfolienstücke von 0,3 mm Dicke entnommen.

Die Folienproben werden in einem Ofen bei 180 °C thermisch belastet und alle 15 Minuten an einer Probe des Yellowness Index (YI) nach ASTM D 1925-70 bestimmt:

Yellowness Index (YI)
nach Belastungszeit in Minuten

| Zeit | 15' | 30' | 45' | 60' | 75' | 90' | 105' |
|---|---|---|---|---|---|---|---|
| YI | 14,8 | 17,7 | 19,5 | 22,5 | 28,6 | 34,8 | 72,4 |

b) Der Test wird nach dem gleichen Verfahren durchgeführt wie unter 9a) beschrieben, mit dem Unterschied, dass der Dryblend aus folgenden Bestandteilen besteht:

100 Teilen PVC (Vestolit® P 1973 K)
4 Teilen $TiO_2$
0,2 Teilen Gleitmittel (Wachs E der Höchst AG)
2,5 Teilen Stabilisatorgemisch

Yellowness Index (YI)
nach Belastungszeit in Minuten

| Zeit | 15' | 30' | 45' | 60' | 75' | 90' | 105' |
|---|---|---|---|---|---|---|---|
| YI | 8,6 | 10,2 | 12,1 | 13,9 | 16,5 | 19,6 | 33,8 |

Beispiel 10

Dauerwalztest

Ein Dryblend, bestehend aus 100 Teilen PVC (Vestolit® HIS 6882), 4 Teilen $TiO_2$ und 2,5 Teilen Stabilisatorgemisch aus Beispiel 5 wurden bei 200 °C einem Dauerwalztest unterworfen und in zeitlichem Abstand von 3 Minuten Proben entnommen, um das Yellowness Index zu bestimmen.

Yellowness Index (Yi)
nach Belastungszeit in Minuten

| Zeit | 3' | 6' | 9' | 12' | 15' | 18' |
|---|---|---|---|---|---|---|
| YI | 6,7 | 7,4 | 8,3 | 9,0 | 9,9 | 11,5 |
| Zeit | 21' | 24' | 27' | 30' | 33' | 36' |
| YI | 12,5 | 14,3 | 16,9 | 20,7 | 28,2 | 37,7 |

Beispiel 11

Xenotest

100 Teile PVC wurden mit 0,2 Teilen Tinuvin® 320 und 2,5 Teilen des Stabilisatorgemisches aus Beispiel 2 in einem schnell laufenden Mischer vermischt und 5 Minuten bei 180 °C auf einem Laborwalzwerk zu einer Folie geformt, aus der bei 180 °C auf einer Plattenpresse eine 0,5 mm dicke transparente Platte gepresst wurde. Die Platte wurde einem Schnellbewitterungstest unterworfen (Xenotest 150 der Fa. Original Hanau Quarzlampen GmbH, Hanau, BRD). Der Beregnungszyklus betrug 29

Minuten Belichtung, 1 Minute Beregnung. Die Belichtung erfolgte im Wendelauf. Bei den Tabellenwerten wird durch h die Gesamtbewitterungszeit in Stunden angegeben. Die Testwerte beschreiben den Verlauf der Verfärbung (Yellowness-Indices).

Yellowness Index (YI)
nach Belastungszeit in Stunden

| Zeit | 600 h | 1200 h | 1800 h | 2400 h | 3000 h | 3600 h | 4200 h |
|---|---|---|---|---|---|---|---|
| YI | 3,5 | 3,6 | 3,6 | 5,4 | 5,2 | 4,7 | 4,8 |

| Zeit | 4800 h | 5400 h | 6000 h | 6600 h | 7200 h | 7800 h | 8400 h |
|---|---|---|---|---|---|---|---|
| YI | 6,8 | 8,4 | 10,1 | 11,4 | 10,0 | 12,8 | 23,7 |

Beispiel 12

Der Xenotest wird wird wie im Beispiel 11 beschrieben durchgeführt, jedoch mit dem Unterschied, dass man

100 Teile PVC (Vestolit® HIS 6882)
4 Teile $TiO_2$
2,5 Teile Stabilisatorgemisch

verwendet und mit dem Xenotest 1200 bestimmt.
Die Testwerte sind aus der Tabelle ersichtlich.

Yellowness Index (YI)
nach Belastungszeit in Stunden

| Zeit | 600 h | 1200 h | 1800 h | 2400 h | 3000 h |
|---|---|---|---|---|---|
| Stabilisator aus Beispiel 6 | 7,3 | 5,0 | 5,1 | 4,7 | 3,8 |
| Stabilisator aus Beispiel 7 | 4,8 | 4,2 | 4,1 | 4,3 | 3,7 |

| Zeit | 3600 h | 4200 h | 4800 h | 5400 h | 6000 h |
|---|---|---|---|---|---|
| Stabilisator aus Beispiel 6 | 4,0 | 4,1 | 3,9 | 4,2 | 3,8 |
| Stabilisator aus Beispiel 7 | 3,8 | 3,6 | 3,5 | 4,1 | 3,9 |

Beispiel 13

Der Xenotest aus Beispiel 11 wird wiederholt, man verwendet jedoch ein Dryblend, bestehend aus 100 Teilen PVC (Vestolit® HIS 6882), 4 Teilen Titandioxid und 2,5 Teilen Stabilisatorgemisch aus Beispiel 5. Die Ergebnisse sind in der Tabelle zusammengefasst.

Yellowness Index (YI)
nach Belastungszeit in Stunden

| Zeit | 0 | 2400 h | 4800 h | 7200 h | 9600 h | 12000 h |
|---|---|---|---|---|---|---|
| YI | 8,2 | 5,2 | 4,8 | 4,1 | 4,4 | 5,7 |

Die Pressplatte zeigte auch nach 12 000 h Bewitterung keine Nachdunklungsreaktion.

Beispiel 14

Aktivatoreffekt

10 Teile Dioctylphthalat und 2 Teile Azodicarbonamid werden mit 1 Teil des Stabilisatorgemisches aus Beispiel 2 als Aktivator vermischt und in einem Kolben konstant auf 180 °C gehalten. Der Kolben wird an eine Gasbürette angeschlossen und die entwickelte Gasmenge zu bestimmten Zeiten abgelesen. Es wird folgendes Resultat erhalten :

| Min.: | 0,5 | 1,0 | 1,5 | 2,0 | 2,5 | 3,0 | 3,5 | 4,0 | 4,5 | 5,0 | 10,0 |
|---|---|---|---|---|---|---|---|---|---|---|---|
| ml: | 29 | 33 | 36 | 46 | 62 | 104 | 143 | 156 | 169 | 189 | 228 |

**Patentansprüche**

1. Stoffgemische bestehend aus einem Organozinnalkoholat der Formel (I)

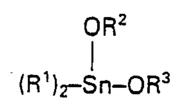
(I)

und aus einem Organozinnmercaptid der Formel (II) bzw. der Formel (III)

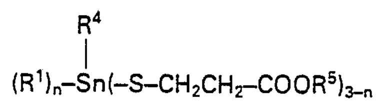
(II)

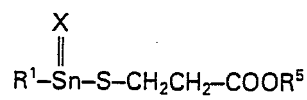
(III)

die gegebenenfalls zusätzlich ein Organozinncarboxylat der Formel (IV) bzw. der Formel V enthalten

$$(R^1)_2\text{–}Sn(\text{–}OOC\text{–}R^6)_2 \qquad (IV)$$

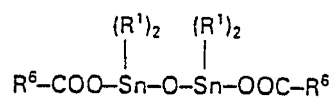
(V)

worin $R^1$ $C_1$-$C_{12}$ Alkyl, $R^2$ $C_{10}$-$C_{30}$ Alkyl, Phenyl substituiert mit einer oder zwei $C_8$-$C_{12}$ Alkylgruppen sind, $R^3$ die für $R^2$ angegebene Bedeutung besitzt oder für die Gruppe $—Sn(OR^2)\ (R^1)_2$ steht, worin $R^1$ und $R^2$ die zuvor angegebene Bedeutung haben, X Schwefel oder Sauerstoff, $R^4$ die Gruppe $—S—CH_2CH_2—COOR^5$ oder $—X—Sn(R^1)_n(S—CH_2CH_2—COOR^5)_{3-n}$ sind, wobei $R^1$ und X die zuvor angegebene Bedeutung haben, $R^5$ $C_8$-$C_{14}$ Alkyl ist, n die Zahl 1 oder 2 ist, und $R^6$ $C_{10}$-$C_{30}$ Alkyl bedeutet, wobei das Gewichtsverhältnis I : II bzw. I : III von 9 : 1 bis 1 : 9 beträgt.

2. Stoffgemische bestehend aus einem Organozinnmercaptid der Formel II bzw. Formel III

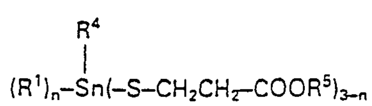
(II)

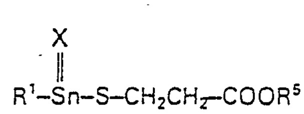
(III)

und aus einem Organozinncarboxylat der Formel IV bzw. der Formel (V)

$$(R^1)_2\text{–}Sn(\text{–}OOC\text{–}R^6)_2 \qquad (IV)$$

$$R^6{-}COO{-}\overset{(R^1)_2}{\overset{|}{Sn}}{-}O{-}\overset{(R^1)_2}{\overset{|}{Sn}}{-}OOC{-}R^6 \qquad (V)$$

worin $R^1$ $C_1$-$C_{12}$ Alkyl, X Schwefel oder Sauerstoff, $R^4$ die Gruppe $—SCH_2CH_2—COOR^5$ oder $—X—Sn(R^1)_n(S—CH_2CH_2—COOR^5)_{3—n}$ sind, wobei $R^1$ und X die zuvor angegebene Bedeutung haben, $R^5$ $C_8$-$C_{14}$ Alkyl ist, n die Zahl 1 oder 2 ist, und $R^6$ $C_{10}$-$C_{30}$ Alkyl bedeutet, wobei das Gewichtsverhältnis II : IV bzw. III : IV von 9 : 1 bis 1 : 9 beträgt.

3. Stoffgemische gemäss Anspruch 1, dadurch gekennzeichnet, dass in der Verbindung der Formel (I) $R^3$ die gleiche Bedeutung hat wie $R^2$.

4. Stoffgemische gemäss Anspruch 1, dadurch gekennzeichnet, dass in der Verbindung der Formel (I) $R^1$ $C_1$-$C_8$ Alkyl, $R^2$ und $R^3$ $C_{10}$-$C_{22}$ Alkyl sind.

5. Stoffgemische gemäss Anspruch 4, dadurch gekennzeichnet, dass $R^1$ n-Butyl ist, $R^2$ und $R^3$ iso-Tridecyl sind.

6. Stoffgemische gemäss Anspruch 1, dadurch gekennzeichnet, dass in der Verbindung der Formel (I) $R^2$ und $R^3$ Phenyl substituiert mit einer oder zwei $C_8$-$C_{12}$ Alkylgruppen bedeuten.

7. Stoffgemische gemäss den Ansprüchen 1 und 2, dadurch gekennzeichnet, dass in der Verbindung der Formel (II) $R^4$ die Gruppe $—S—CH_2CH_2—COOR^5$ ist, wobei $R^5$ $C_8$-$C_{14}$ Alkyl bedeutet.

8. Stoffgemische gemäss Anspuch 7, dadurch gekennzeichnet, dass $R^5$ 2-Äthylhexyl bedeutet.

9. Stoffgemische gemäss Anspruch 1, dadurch gekennzeichnet, dass sie zusätzlich die Verbindung der Formel IV enthalten, worin $R^6$ $C_{10}$-$C_{22}$ Alkyl ist.

10. Stoffgemische gemäss Anspruch 2, dadurch gekennzeichnet, das $R^6$ n-Undecyl bedeutet.

11. Verwendung von Stoffgemischen gemäss den Ansprüchen 1 und 2 als Stabilisator für chlorhaltige Polymere.

12. Verwendung von Stoffgemischen gemäss den Ansprüchen 1 und 2 als Stabilisator für Hart-PVC.

13. Chlorhaltige Polymere und geschäumte Kunststoffe enthaltend ein Stoffgemisch gemäss Anspruch 1.

14. Massen bestehend aus

a) chlorhaltigen Polymeren oder geschäumten Kunststoffen,
b) einen Stoffgemisch gemäß Anspruch 2 sowie gegebenenfalls
c) 2,6-Dialkylphenolen als Antioxidantien und/oder
d) UV-Absorbern, Lichtschutzmitteln, Weichmachern, Gleitmitteln, Emulgatoren, Füllstoffen, Russ, Asbest, Kaolin, Talk, Glasfasern, Pigmenten, optischen Aufhellern, Flammschutzmitteln, Antistatika.

**Claims**

1. A composition of matter comprising an organo-tin alcoholate of the formula (I)

$$(R^1)_2{-}\overset{OR^2}{\overset{|}{Sn}}{-}OR^3 \qquad (I)$$

and an organo-tin mercaptide of the formula (II) or (III)

$$(R^1)_n{-}\overset{R^4}{\overset{|}{Sn}}(-S-CH_2CH_2-COOR^5)_{3-n} \qquad (II)$$

$$R^1{-}\overset{X}{\overset{\|}{Sn}}{-}S{-}CH_2CH_2{-}COOR^5 \qquad (III)$$

which composition may additionally contain an organo-tin carboxylate of the formula (IV) or (V)

$$(R^1)_2{-}Sn(-OOC-R^6)_2 \qquad (IV)$$

$$R^6{-}COO{-}\overset{(R^1)_2}{\overset{|}{Sn}}{-}O{-}\overset{(R^1)_2}{\overset{|}{Sn}}{-}OOC{-}R^6 \qquad (V)$$

in which formulae $R^1$ is $C_1$-$C_{12}$ alkyl, $R^2$ is $C_{10}$-$C_{30}$ alkyl, phenyl which is substituted by one or two $C_8$-$C_{12}$ alkyl groups, $R^3$ has the meaning assigned to $R^2$ or is the $—Sn(OR^2)(R^1)_2$ group, wherein $R^1$ and $R^2$ are as defined above, X is sulfur or oxygen, $R^4$ is the $—S—CH_2CH_2—COOR^5$ or $—X—Sn(R^1)_n(S—CH_2CH_2—COOR^5)_{3—n}$ group, in which $R^1$ and X are as defined above, $R^5$ is $C_8$-$C_{14}$ alkyl, n is 1 or 2, and $R^6$ is $C_{10}$-$C_{30}$ alkyl, the weight ratio of I : II or I : III being in the range from 9 : 1 to 1 : 9.

2. A composition of matter comprising an organo-tin mercaptide of the formula II or III

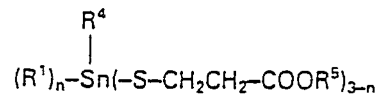

(II)

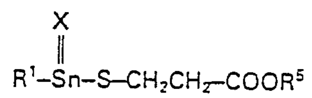

(III)

and an organo-tin carboxylate of the formula IV or V

$$(R^1)_2-Sn(-OOC-R^6)_2 \qquad (IV)$$

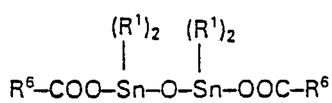

(V)

in which formulae $R^1$ is $C_1$-$C_{12}$ alkyl, X is sulfur or oxygen, $R_4$ is the $—S—CH_2CH_2—COOR^5$ or $—X—Sn(R^1)_n(S—CH_2CH_2—COOR^5)_{3—n}$ group, in which $R^1$ and X are as defined above, $R^5$ is $C_8$-$C_{14}$ alkyl, n is 1 or 2, and $R^6$ is $C_{10}$-$C_{30}$ alkyl, the weight ratio of II : IV or III : IV being in the range from 9 : 1 to 1 : 9.

3. A composition of matter according to claim 1, wherein $R^3$ in the compound of the formula (I) has the same meaning as $R^2$.

4. A composition of matter according to claim 1, wherein $R^1$ in the compound of the formula (I) is $C_1$-$C_8$ alkyl and $R^2$ and $R^3$ are $C_{10}$-$C_{22}$ alkyl.

5. A composition of matter according to claim 4, wherein $R^1$ is n-butyl and $R^2$ and $R^3$ are iso-tridecyl.

6. A composition of matter according to claim 1, wherein $R^2$ and $R^3$ in the compound of the formula (I) are phenyl which is substituted by one or two $C_8$-$C_{22}$ alkyl groups.

7. A composition of matter according to claim 1, wherein $R^4$ in the compound of the formula (II) is the $—S—CH_2CH_2—COOR^5$ group, in which $R^5$ is $C_8$-$C_{14}$ alkyl.

8. A composition of matter according to claim 7, wherein $R^5$ is 2-ethylhexyl.

9. A composition of matter according to claim 1, which additionally contains the compound of the formula IV, wherein $R^6$ is $C_{10}$-$C_{22}$ alkyl.

10. A composition of matter according to claim 2, wherein $R^6$ is n-undecyl.

11. Use of a composition of matter according to claims 1 and 2 as stabiliser for chlorinated polymers.

12. Use of a composition of matter according to claims 1 and 2 as stabiliser for rigid PVC.

13. A chlorinated polymer and foamed plastics material containing a composition of matter according to claim 1.

14. A composition comprising

a) a chorinated polymer or foamed plastics material,
b) a composition of matter as claimed in claim 2, and optionally
c) a 2,6-dialkylphenol as antioxidant, and/or
d) a UV absorber, a light stabiliser, a plasticiser, a lubricant, an emulsifier, a filler, carbon black, asbestos, kaolin, talcum, glass fibres, a pigment, a fluorescent whitening agent, a flame retardant, an antistatic agent.

**Revendications**

1. Mélanges d'un alcoolate organostannique de formule (I)

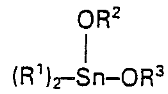

(I)

et d'un thiolate organostannique de formule II ou III :

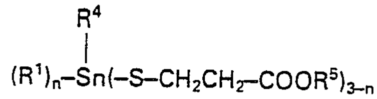

(II)

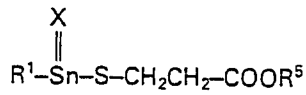

(III)

mélanges pouvant éventuellement contenir en plus un carboxylate organostannique de formule IV ou V :

$$(R^1)_2-Sn(-OOC-R^6)_2 \qquad (IV)$$

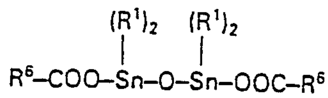

(V)

formules dans lesquelles $R^1$ représente un alkyle en $C_1$-$C_{12}$, $R^2$ un alkyle en $C_{10}$-$C_{30}$ ou un phényle substitué par un ou deux alkyles en $C_8$-$C_{12}$, $R^3$ a les significations données pour $R^2$ ou bien est un groupe —$Sn(OR^2)(R^1)_2$, $R^1$ et $R^2$ ayant les significations ci-dessus, X désigne le soufre ou l'oxygène, $R^4$ un groupe —S—$CH_2CH_2$—$COOR^5$ ou —X—$Sn(R^1)_n(S—CH_2CH_2—COOR^5)_{3-n}$, $R^1$ et X ayant les significations précédentes, $R^5$ est un alkyle en $C_8$-$C_{14}$, n le nombre 1 ou 2 et $R^6$ un alkyle en $C_{10}$-$C_{30}$, les rapports pondéraux I : II ou I : III étant compris entre 9 : 1 et 1 : 9.

2. Mélanges d'un thiolate organostannique de formule II ou III

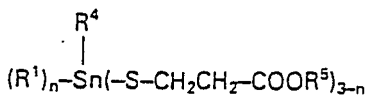

(II)

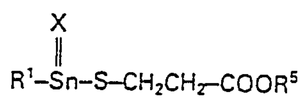

(III)

et d'un carboxylate organostannique de formule IV ou V

$$(R^1)_2-Sn(-OOC-R^6)_2 \qquad (IV)$$

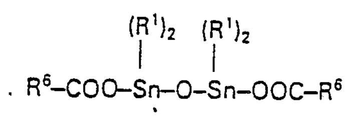

(V)

formules dans lesquelles $R^1$ représente un alkyle en $C_1$-$C_{12}$, X le soufre et l'oxygène, $R^4$ un groupe —$SCH_2CH_2$—$COOR^5$ ou —X—$Sn(R^1)_n$ $(S—CH_2CH_2—COOR^5)_{3-n}$, $R^1$ et X ayant les significations ci-dessus, $R^5$ désigne un alkyle en $C_8$-$C_{14}$, n est le nombre 1 ou 2, $R^6$ un alkyle en $C_{10}$-$C_{30}$, le rapport pondéral II : IV ou III : IV étant compris entre 9 : 1 et 1 : 9.

3. Mélanges selon la revendication 1, caractérisés en ce que dans le composé de formule I $R^3$ a la même signification que $R^2$.

4. Mélanges selon la revendication 1, caractérisés en ce que dans le composé de formule I $R^1$ est un alkyle en $C_1$-$C_8$ et $R^2$ et $R^3$ sont des alkyles en $C_{10}$-$C_{22}$.

5. Mélanges selon la revendication 4, caractérisés en ce que $R^1$ est le groupe n-butyle et $R^2$ et $R^3$ sont chacun le groupe iso-tridécyle.

6. Mélanges selon la revendication 1, caractérisés en ce que dans le composé de formule I $R^2$ et $R^3$ sont des phényles substitués par un ou deux alkyles en $C_8$-$C_{12}$.

7. Mélanges selon la revendication 1 ou 2, caractérisés en ce que dans le composé de formule (II) $R^4$ est un groupe $—S—CH_2CH_2—COOR^5$, $R^5$ étant un alkyle en $C_8$-$C_{14}$.

8. Mélanges selon la revendication 7, caractérisés en ce que $R^5$ est un groupe 2-éthylhexyle.

9. Mélanges selon la revendication 1, caractérisés en ce qu'ils contiennent en outre un composé de formule IV dans lequel $R^6$ est un alkyle en $C_{10}$-$C_{22}$.

10. Mélanges selon la revendication 2, caractérisés en ce que $R^6$ est un groupe n-undécyle.

11. Utilisation de mélanges selon l'une quelconque des revendications précédentes comme stabilisants pour matières polymères chlorées.

12. Utilisation de mélanges selon l'une quelconque des revendications précédentes comme stabilisants pour PVC dur.

13. Polymères chlorés et matières plastiques moussées contenant un mélange selon la revendication 1.

14. Matières constituées :

a) de polymères chlorés ou de matières plastiques moussées,

b) d'un mélange selon la revendication 2 et éventuellement :

c) de dialkyl-2,6 phénols comme anti-oxydants, et/ou

d) d'absorbeurs de rayons ultraviolets, de stabilisants à la lumière, de plastifiants, de lubrifiants, d'émulsionnants, de charges, de noir de carbone, d'amiante, de kaolin, de talc, de fibres de verre, de pigments, d'azureurs optiques, d'ignifugeants et/ou d'anti-statiques.